# EUROPÄISCHE PATENTSCHRIFT

(11) **EP 1 038 221 B1**
(45) Veröffentlichungstag und Bekanntmachung des Hinweises auf die Patenterteilung: **13.02.2002**
(21) Anmeldenummer: 98961046.4
(22) Anmeldetag: 26.10.1998
(51) Int. Cl.: G06F 11/00

(54) **VERFAHREN ZUR ÜBERPRÜFUNG DER PFADÜBERDECKUNG BEI SOFTWARE-TESTS**
METHOD FOR CHECKING PATH COVERAGE IN SOFTWARE TESTS
PROCEDE DE SURVEILLANCE DE COUVERTURE DE CHEMINS LORS DE TESTS DE LOGICIELS

(30) Priorität: 09.12.1997 DE 19754611
(43) Veröffentlichungstag der Anmeldung: 27.09.2000
(73) Patentinhaber: SIEMENS AKTIENGESELLSCHAFT, 80333 München (DE)
(72) Erfinder: LUDWIG, Ralf-Carsten, D-13187 Berlin (DE)
(86) Internationale Anmeldenummer: DE9803133
(87) Internationale Veröffentlichungsnummer: WO9930232

(56) Entgegenhaltungen:
- CHRIS CAERTS ET AL.: "PDG: A process-level debugger for concurrent programs in the GRAPE parallel programming environment" FUTURE GENERATIONS COMPUTER SYSTEMS., Bd. 11, Nr. 2, März 1995, Seiten 199-210, XP000497792 AMSTERDAM NL

## Beschreibung

Die Erfindung betrifft ein Verfahren zur graphischen Darstellung der Ergebnisse von Tests von Softwareprogrammen, wobei das zu testende Softwareprogramm aus Modul-Bausteinen besteht, und das Softwareprogramm in Form eines Ablauf-Graphen dargestellt werden kann, und bei dem Test dieses Softwareprogrammes ein Ablaufprotokoll erstellt wurde.

Die Entwicklung von Software aus bestehenden Software-Modulen wird bevorzugt, wenn dies möglich ist. Dabei werden viele Fehlerquellen vermieden, da die einzelnen vorgefertigten Software-Module bereits getestet vorliegen und so nur der Datenfluß und die korrekte Bedienung der Schnittstellen der vorgefertigten Schnittstellen überprüft werden muß.
Eine weitere Vereinfachung der Entwicklung ist die Verwendung einer graphischen Oberfläche, welche den Datenfluß anhand eines Graphen (z. B. eines Baumes) darstellt.

Eine Anwendungsmöglichkeit dieser vereinfachten Software-Entwicklung ist die Dienste-Entwicklung für ein Intelligentes Netz (IN). Ein IN bietet die Möglichkeit, einem Kunden von Telekommunikationsdiensten neben der Sprach- und Datenkommunikation weitere Mehrwertdienste anzubieten. Hierbei handelt es sich zum Beispiel um bereichsweit einheitliche Nummern, geänderte Kostenregelung wie 'freephone' oder 'premium service', das Einspielen von Ansagen usw.
Diese Dienste müssen dem Bedarf des Diensteanbieters und des Dienstenehmers angepaßt werden, sie sind aus einzelnen standardisierten Software-Modulen, den sogenannten SIBs ((Service Independent Building Blocks) einfach zusammensetzbar.

Die Entwicklung der Dienste kann noch einfacher gestaltet werden, durch eine graphische Programmieroberfläche (SD, Service Definition). Dabei werden die verschiedenen Module (SIB) als Symbole (Icon) dargestellt, welche in einer baumartigen oder vernetzten Struktur in einer Graphik verbunden werden können. Diese Struktur kann dann automatisch in das ablauffähige Programm (FSL, Flexible Service Logic) übersetzt werden, als das es dann in einem geeigneten Netzelement in dem Telefon- oder Datennetz laufen soll.

Bevor der neue Dienst jedoch angewendet werden kann, muß ein Test der neuen Dienst-Software (Service Logik) durchgeführt werden. Dies geschieht durch spezielle Testverfahren, die verschiedene Anwendungsfälle simulieren und das Ergebnis des Testdurchlaufs in einem sogenannten Trace mitprotokollieren. Der Programmierer muß dann manuell überprüfen, ob das Ergebnis des Tests korrekt ist und ob der Test die komplette Software überprüft.

Eine weitere Möglichkeit der Fehlersuche ist der Vergleich mit dem Graphen, der die Servicelogik darstellt. So kann leichter überprüft werden, ob alle Alternativen und somit alle Pfade des Graphen mit dem Test erfaßt worden sind. Anhand der Darstellung des Dienstegraphen auf der Graphischen Oberfläche des Service Definition (SD) Werkzeuges kann dies mühsam nachvollzogen werden.
Ein Ausdruck des Dienste-Graphen ist oftmals auch möglich, dieser kann sich allerdings über mehrere Papierseiten hinziehen, was das Ganze wiederum sehr unübersichtlich macht.

In dem Artikel " PDG: A process-level debugger for concurrent programs in the GRAPE parallel programming environment" von Chris Caerts et. al. veröffentlicht im "Future Generations Computer Systems "Band 11, Nr. 2, März 1995, seiten 199-210 wird bereits ein Verfahren zur graphischen Darstellung der Ergebnisse von Tests von Softwareprogrammen, die aus Modul-Bausteinen bestehen, beschrieben. Bei dem Test des Softwareprogramms wird ein Ablaufprotokoll erstellt, das automatisch ausgewertet werden kann und deren Ergebnisse im Ablauf-Graphen markiert werden.

Aufgabe der Erfindung ist es, eine Möglichkeit anzugeben, wie eine zu testende Software durch den Test möglichst vollständig erfaßt worden ist.

Diese Aufgabe wird von dem im Patentanspruch 1 definierten Verfahren gelöst. Diese Aufgabe wird ebenfalls von dem in Pantentanspruch 2 definierten Verfahren gelöst.

Eine wesentliche Voraussetzung des erfindungsgemäßen Verfahrens ist, daß das zu testende Software-Programm zerlegbar ist in einzelne Programm-Module. Der Programmablauf kann dann einfach als Graph dargestellt werden, indem die einzelnen Programm-Module miteinander (durch Kanten) in der Ablaufreihenfolge verbunden werden. Der Graph kann dabei eine baumartige Struktur einnehmen.
Die Darstellung dieses Programmablaufes (im Weiteren auch FSL, Flexible Service Logic genannt) kann beliebig erweitert werden, etwa durch zusätzliche Beschriftungen der einzelnen Programm-Module (z. B. mit dem Namen) und der einzelnen Verbindungen / Kanten (z. B. mit Übergabeparametern oder dem Ergebnis einer Entscheidungsabfrage).
Bei dem Test des Software-Programms wird ein Test-Ablaufprotokoll (Traceprotokoll) erzeugt, welches Angaben enthält über den Testverlauf, also die Reaktionen des zu testenden Programmes auf die einzelnen Testfälle, zum Beispiel die jeweils durchlaufenen Software-Module (SIB-Namen).
Dieses Traceprotokoll soll nun erfindungsgemäß automatisch ausgewertet werden und dann die durchlaufenen Module und Pfade in dem Ablaufgraphen optisch markiert werden.
Damit kann nicht nur am Bildschirm verfolgt werden, ob das getestete Programm die richtigen Module durchläuft und sich dabei korrekt verhält, also zu einem richtigen Ergebnis gelangt. Durch geeignete Markierungen kann überprüft werden, ob der durchgeführte Test das Softwareprogramm vollständig testet, also alle möglichen Pfade durchlaufen werden (Pfadüberdeckung) oder ob es Unterschiede gibt zwischen dem erwartetem, also korrektem und dem tatsächlichen, dann fehlerhaftem Durchlaufen des Ablaufgraphen während des Tests.

Das vorgeschlagene Verfahren vereinfacht das Testen der neu kreierten Software-Programme erheblich, vor allem für unerfahrene Tester oder Personen, welche mit dem Programm-Ablauf nicht so gut vertraut sind (bei der Trennung von Entwicklung und Test beispielsweise).
Das vorher notwendige mühsame manuelle Auswerten der Testprotokolle mittels dem Vergleich des Trace-Protokolls und des Programmablaufes kann wegfallen.

Vorteilhafte Ausgestaltungen und Weiterbildungen sind in den Unteransprüchen angegeben.

Besonders günstig erweist sich das erfindungsgemäße Verfahren, wenn die zu testende Software zuvor mittels eines graphischen Entwicklungswerkzeuges (SD) in der Form eines Ablaufgraphen definiert wurde. Dabei können zum Beispiel die einzelnen Programm-Module in Form von Symbolen (Icon) angeordnet und durch Modul-Aufrufe (Pfeile, gerichtete Kanten des Graphen) verbunden werden. Das Ergebnis ist ein FSL-Quellcode, der mittels eines Übersetzers auf einen ablauffähigen Programmcode abgebildet wird.
Dieser Ablaufgraph kann bereits zur manuellen Auswertung des Traceprotokolles herangezogen werden, indem anhand eines Ausdruckes dieses Graphen oder an der Entwicklungsoberfläche nachvollzogen wurde. Der Testaufwand ist dabei bei jedem erneuten Testdurchlauf (Regressionstest) wieder gleich hoch.

Eine Möglichkeit der Markierung ist die farbliche Hervorhebung der einzelnen benutzten Programm-Module und der dazu durchlaufenen Wege (Branches, Kanten des Graphen). Eine vollständige Testüberdeckung ist dann erreicht, wenn alle Kanten des Programm-Ablaufdaten eingefärbt sind, d. h. alle Programm-Module und alle Wege zwischen den Programm-Modulen durchlaufen wurden. Die Anwendung von verschiedenen Farbtypen (etwa jeder durchlaufene Testfall wird durch eine andere Farbe markiert, oder die Häufigkeit, mit der ein bestimmter Weg durchlaufen wird, oder die Unterscheidung zwischen erwartetem, also korrektem und fehlerhaftem Durchlaufen des Ablaufgraphen während des Tests) sei dem Fachmann überlassen. Neben einem geänderten Farbtyp kann auch ein geänderter Linientyp (gestrichelt, fett...) den verwendeten Weg kennzeichnen.
Dies ermöglicht die Testdurchführung auch, wenn keine farbige Bearbeitungsoberfläche zur Verfügung steht.

Besonders in der bereits beschriebenen Diensteentwicklung für ein Intelligentes Netz ist ein einfach durchzuführender und korrekter Test sehr wichtig. Die Dienstelogik muß, wenn sie einmal in dem Telefon- oder Datennetz aktiviert wurde, sehr korrekt funktionieren, da dies sonst unvorhersehbare Auswirkungen und Seiteneffekte auf das gesamte Netz beinhalten kann.
Da durch die Graphische Entwurfsoberfläche ein Neudesign von Diensten sehr einfach ist, soll durch eine äquivalente Oberfläche eines Test-Werkzeuges dieses ebenso vereinfacht werden.

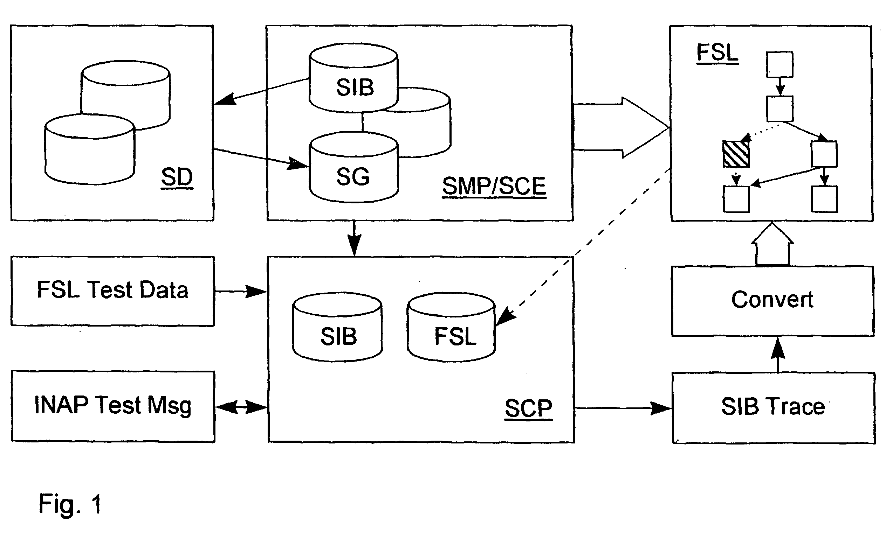

Im folgenden wird die Erfindung anhand von einem Ausführungsbeispiel erläutert. Dabei zeigt die Figur 1 den Weg von der Entwicklung eines Dienstes bis zur Testauswertung mittels des erfindungsgemäß vorgeschlagenen Ablauf-Graphen.

Der Dienste-Entwickler (Service Designer) entwirft mit Hilfe eines graphischen Entwicklungs-Werkzeuges (SD, Service Definition) einen neuen Dienst. Dieser wird im Wesentlichen zusammengesetzt aus einer Bibliothek aus bereits vordefinierten Programm-Modulen (Service Independent Building Blocks, SIB). Dies geschieht in einem wichtigen Element des Intelligenten Netzes, dem sogenannten Service Management Point (SMP) beziehungsweise in dem dafür vorgesehenen Service Creation Environment (SCE), welches eine einfach anzuwendende Entwicklungsoberfläche anbietet. Auf diese Entwicklungsumgebung können mehrere Diensteentwickler zugreifen.
Die Programm-Module werden zu einem Dienstelogik-Graphen (oder auch Programm-Ablauf-Graph) verbunden. Um einen funktionsfähigen Dienst zu erhalten, müssen weitere Festlegungen getroffen werden, welche aber nicht Gegenstand der Erfindung sind.
Der Dienste-Graph (FSL, flexible Service Logic) wird während der Definitionsphase auf der Entwicklungsoberfläche dargestellt. Aus diesem Graphen kann dann automatisch ein Dienste-Logik-Programm generiert werden, welches dann auf seine Funktionsfähigkeit getestet werden muß.
Das Dienste-Logik-Programm wird auf das ausführende Netzelement gespeichert (SCP, Service Control Point).
Zur Durchführung des Testes sind weitere Testdaten erforderlich (FSL Test Data, INAP Test Msg). Mit Hilfe eines bereits bekannten Mechanismus wird der Test durchlaufen und ein Test-Protokoll (SIB Trace) geschrieben.

Bei der erfindungsgemäßen Lösung wird dieses Testprotokoll nur mittels einer Konvertierungsfunktion (Convert) automatisch ausgewertet und mit dem zugehörigen Dienstegraphen verglichen. Die durchlaufenen SIBs zum Beispiel werden anhand der mitprotokollierten SIB-ID identifiziert und können so in dem Graphen in geeigneter Weise markiert werden. Dabei können etwa in dem FSL Quelltext die Eigenschaftsparameter der durchlaufenen SIB-Verbindungslinien (Branches) auf einen Farbwert oder Linientyp gesetzt werden.

Bei dem in der Figur dargestellten Beispiel wurde ein möglicher Weg nicht durchlaufen, dargestellt durch die gepunkteten Verbindungslinien. Dabei wurde ein Programm-Modul nicht erreicht, welches hier durch die Schraffur markiert wurde.

### Abkürzungsverzeichnis

- FSL: Flexible Service Logic
- INAP: Intelligent Network Application Part
- SCE: Service Creation Environment
- SD: Service Definition
- SG: Service Graphs
- SIB: Service Independent Building Blocks
- SMP: Service Management Point

## Patentansprüche

1. Verfahren zur graphischen Darstellung der Ergebnisse von Tests von Softwareprogrammen für die Realisierung von Telekommunikationsdiensten,
- bei dem das zu testende Softwareprogramm aus Modul-Bausteinen (SIB) besteht, und
- das Softwareprogramm in Form eines Ablauf-Graphen dargestellt werden kann, und
- bei dem Test dieses Softwareprogrammes ein Ablaufprotokoll erstellt wurde, und
- alle Testergebnisse eines Tests in der Darstellung eines Ablauf-Graphen markiert werden, und
- diejenigen Modul-Bausteine und Verbindungslinien des Ablauf-Graphen markiert werden, die bei dem Test nicht durchlaufen wurden.

2. Verfahren zur graphischen Darstellung der Ergebnisse von Tests von Softwareprogrammen für die Realisierung von Telekommunikationsdiensten,
- bei dem das zu testende Softwareprogramm aus Modul-Bausteinen (SIB) besteht, und
- das Softwareprogramm in Form eines Ablauf-Graphen dargestellt werden kann, und
- bei dem Test dieses Softwareprogrammes ein Ablaufprotokoll erstellt wurde, und
- alle Testergebnisse eines Tests in der Darstellung eines Ablauf-Graphen markiert werden, und
- das erzeugte Testergebnis mit einem erwarteten Testergebnis verglichen wird und
- diejenigen Modul-Bausteine und Verbindungslinien des Ablauf-Graphen markiert werden, die bei dem Test fehlerhaft durchlaufen oder nicht durchlaufen wurden.

3. Verfahren nach Patentanspruch 1 oder 2,
**dadurch gekennzeichnet, daß**
der Programmablauf des zu testenden Softwareprogrammes mit Hilfe einer graphischen Programmieroberfläche (SD) in Form eines Ablauf-Graphen definiert wurde, und
das Softwareprogramm aus dem Ablauf-Graph konvertiert wurde.

## Claims

1. Method for graphically displaying the results of tests on software programs for providing telecommunication services,
- in which the software program to be tested comprises modular building blocks (SIB), and
- the software program can be displayed in the form of a flowchart, and
- testing this software program has produced a flow log, and
- all the test results for a test are marked in the display of a flowchart, and
- those modular building blocks and connecting lines in the flowchart which were not passed through during the test are marked.

2. Method for graphically displaying the results of tests on software programs for providing telecommunication services,
- in which the software program to be tested comprises modular building blocks (SIB), and
- the software program can be displayed in the form of a flowchart, and
- testing this software program has produced a flow log, and
- all the test results for a test can be marked in the display of a flowchart, and
- the test result produced is compared with an expected test result, and
- those modular building blocks and connecting lines in the flowchart which were passed through incorrectly or were not passed through during the test are marked.

3. Method according to Patent Claim 1 or 2,
**characterized in that**
the program flow for the software program to be tested has been defined using a graphical programming interface (SD) in the form of a flowchart, and
the software program has been converted from the flowchart.

## Revendications

1. Procédé de représentation graphique des résultats de tests de logiciels pour la réalisation de services de télécommunication
- dans le cas duquel le logiciel à tester est composé d'éléments modulaires (SIB), et
- le logiciel peut être représenté sous forme d'un graphe d'exécution, et
- un traçage d'exécution a été établi lors du test de ce logiciel, et
- tous les résultats d'un test sont marqués dans la représentation d'un graphe d'exécution et
- les éléments modulaires et les lignes de liaison du graphe d'exécution qui n'ont pas été prises en compte lors du test sont marqués.

2. Procédé de représentation graphique des résultats de tests de logiciels pour la réalisation de services de télécommunication
- dans le cas duquel le logiciel à tester est composé d'éléments modulaires (SIB), et
- le logiciel peut être représenté sous forme d'un graphe d'exécution, et
- un traçage d'exécution a été établi lors du test de ce logiciel, et
- tous les résultats d'un test sont marqués dans la représentation d'un graphe d'exécution, et
- le résultat du test obtenu est comparé avec un résultat du test attendu et
- les éléments modulaires et les lignes de liaison du graphe d'exécution qui n'ont pas ou pas correctement été pris en compte lors du test sont marqués.

3. Procédé selon la revendication 1 ou 2, **caractérisé en ce que** l'exécution du programme du logiciel à tester a été définie sous forme d'un graphe d'exécution à l'aide d'une surface de programmation graphique (SD) et **en ce que** le logiciel a été converti au départ du graphe d'exécution.
